# EUROPÄISCHE PATENTANMELDUNG

(11) **EP 1 388 563 A2**
(43) Veröffentlichungstag der Anmeldung: **11.02.2004**
(21) Anmeldenummer: 03011677.6
(22) Anmeldetag: 23.05.2003
(51) Int. Cl.: C08K 5/3435, C08K 5/3475, C08L 97/00

(54) **Stabilisierung von Polymeren gegenüber lichtinduziertem Abbau**

(30) Priorität: 09.08.2002 DE 10236741
(71) Anmelder: Remmers Baustofftechnik GmbH, D-49624 Löningen (DE)
(72) Erfinder: Overhageböck, Ludger, 49692 Sevelten (DE)
(74) Vertreter: Siekmann, Gunnar, Dipl.-Phys.

(57) **Zusammenfassung**

Zusammensetzung zur Stabilisierung von Lignin und/oder von Beschichtungen auf Polymerbasis gegenüber lichtinduziertem Abbau, gekennzeichnet durch einen Gehalt an wenigstens einer Verbindung aus der Gruppe von N-Hydroxy-2,2,6,6,-tetramethyl-piperidin-Verbindungen und/oder deren Derivaten.

## Beschreibung

Die vorliegende Erfindung betrifft Zusammensetzungen zur Stabilisierung von Lignin und von Beschichtungen auf Polymerbasis gegenüber lichtinduziertem Abbau.

Beschichtete Oberflächen, insbesondere in Verbindung mit Holz, unterliegen durch Lichteinwirkung einem licht-induzierten Abbau, der sich durch frühzeitige Farbveränderungen, insbesondere einer Vergilbung und dem nachfolgenden Abbau der Polymermatrix manifestiert. Unter Abbau der Polymermatrix versteht man insbesondere Matrixrisse, eine Delaminierung, Abnahme der Elastizität und/oder Brüchigkeit.

Die gegenwärtigen Dauerhaftigkeiten, das heißt Haltbarkeiten farbloser Beschichtungen auf chemisch aktiven Substraten, wie zum Beispiel Holz, liegen bei etwa 100 bis 400 Stunden bei der Prüfung im Kurzbewitterungstest, entsprechend etwa 8-12 Monaten im Außenbereich (Freiland). In diesem Zusammenhang wird auf das sich anschließende Diagramm, worin die Zeit gegenüber der relativen Elastizität bzw. Haftung aufgetragen ist, bezug genommen.

Neben der Stabilisierung der Polymermatrix ist deshalb gleichzeitig eine Stabilisierung des Lignins erforderlich, um eine hohe Dauerhaftigkeit bzw. Haltbarkeit der Beschichtungen zu erzielen.

Diese doppelte Problematik war bisher nicht lösbar. Aus der Literatur sind keine Vorschläge bekannt, wie diesem sogenannten "Yellowing" entgegengewirkt werden könnte.

Bei der Holzbehandlung werden hellere Farbtöne immer noch mittels anorganischer, "heller Pigmente" stabilisiert, was aber stark zu Lasten der Filmtransparenz geht.

Es war daher Aufgabe der vorliegenden Erfindung Beschichtungszusammensetzungen bereitzustellen, welche vorgenannten Problemen lösen können. Es ist eine wirksame Stabilisierung der Polymermatrix und gleichzeitig die des Lignins zu erzielen. Im Rahmen der vorliegenden Erfindung ist unter Polymermatrix eine solche insbesondere aus Acrylaten, Polyurethanacrylaten, Polyurethan-(meth)acrylaten, Siloxanen und/oder Silanen zu verstehen.

Gegenstand der vorliegenden Erfindung ist demnach eine Zusammensetzung zur Stabilisierung von Lignin und/oder Beschichtungen auf Polymerbasis gegenüber lichtinduziertem Abbau, welche sich durch einen Gehalt an wenigstens einer Verbindung aus der Gruppe von N-Hydroxy-2,2,6,6-tetramethyl-piperidin-Verbindungen und/oder Derivaten davon auszeichnet.

Durch solche Zusammensetzungen wird eine nachhaltige Verbesserung der Haltbarkeiten von Beschichtungen, u.a. farblosen, bezüglich Dauerhaftigkeit und Verfärbung auf Holz und anderen Substraten, wie Kunststoff, Glas, mineralischen Untergründen, Metall usw. sowohl im Außen- wie im Innenbereich erzielt.

Die erfindungsgemäßen Beschichtungen auf Polymerbasis können in allen vorgenannten Bereichen Anwendung finden.

Bevorzugte Ausführungsformen ergeben sich aus den Unteransprüchen 2 bis 11, wonach die Zusammensetzung einen Gehalt an wenigstens 4-Hydroxy-2,2,6,6,-tetramethylpiperidinoxid **(1)**, und/oder Bis-(1,2,2,6,6,-pentamethyl-4-piperidyl)-sebacat **(2)**, und/oder Methyl-(1,2,2,6,6,pentamethyl-4-piperidyl)-sebacat **(3)** und/oder, 3-(3'-Benzotriazol-2-yl-5-tert-butyl-4-hydroxyphenyl)propionsäure in Form der hydrolisierten Base **(4)** und/oder eine Verbindung der allgemeinen Formel **(A3)**

R(OCH₂CH₂) ₆₋₇OR

ist, worin R gleichzeitig oder verschieden voneinander einen Wasserstoffrest oder den Rest

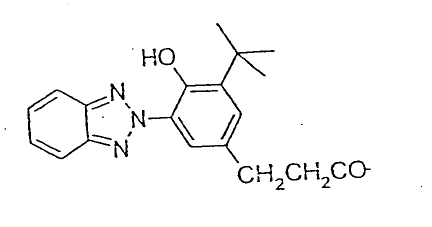

Alle diese Zusammensetzungen fördern die Stabilisierung von Lignin und der in physikalisch und/oder chemischphysikalisch trocknenden und/oder strahlenhärtenden (mittels UV-Licht) Beschichtungsstoffe eingesetzten Polymere gegenüber lichtinduziertem Abbau. Hierdurch wird eine nachhaltige Verbesserung der Haltbarkeiten von Beschichtungen bezüglich deren Dauerhaftigkeit gegen Verfärbungen auf Holz und anderen Substraten im Außen- und Innenbereich erreicht.

Besonders bevorzugte Zusammensetzungen ergeben sich aus den Unteransprüchen 7 bis 10, da sich hier ein deutlicher Synergismus der eingesetzten Verbindungen ergibt. Einerseits wird die Fotooxidation des Lignins unterbunden und andererseits gleichzeitig die vorhandene Eigenfärbung des Substrates Holz (ΔE 1,5 %) stabilisiert. Zum Anderen beruht der Synergismus auf dem inhibitorischen Effekt auf die Spaltung der β-O-4-Einheiten. Die O- und C- zentrierten Radikale werden in die Spaltung der β-Arylether-Gruppen einbezogen, wenn die chemischen Zusammensetzungen Kombinationen Verbindungen **(1)**+**(4)** oder **(1)**+(2) oder **(1)**+**(3)** oder **(1)**+**(A3)** gemeinsam enthalten. Das einzuhaltende Mengenverhältnis der Verbindungen in der Kombination zueinander ist weitgehend unkritisch. Mit den Kombinationen ließen sich unerwartete und erhebliche synergistische Effekte (potenzierende Wirkung) hinsichtlich einer erhöhten UV-Resistenz bei den Polymeren, wie Lignin, Acrylaten, Polyurethanacrylaten, Polyurethan(meth)acrylaten, Siloxanen, und/oder Silanen, erreichen.

Insbesondere bei einem Gehalt von **(A3)** ließ sich zusätzlich ein lichtinduzierter Abbau der chemischen Substanzen bzw. Stoffe verhindern.

### Wirkungsweise auf Lignin

Die erfindungsgemäßen Zusammensetzungen beeinflussen die Derivatisierung bei nachfolgender Spaltungsreduktion der β-Arylether-Gruppen, woraus eine Unterbindung der Fotooxidation des Lignings resultiert. Darüber hinaus ist eine antioxidative Wirkung auf die Phenolgruppen zu verzeichnen, wodurch die Bildung chromophorer Addukte durch langsame β-O-4-Spaltung verhindert wird.

### Wirkungsweise auf Polymerbasis

Die Polymerbasis besteht, wie oben erwähnt, aus bei herkömmlichen Beschichtungsverfahren üblichen Acrylaten, Polyurethan-acrylaten, Polyurethan(meth)acrylaten, Siloxanen und/oder Silanen und/oder aus Lignin. Die Wirkungsweise beruht auf einer antioxidativen Wirkung gegenüber OH-Gruppen innerhalb der Polymermatrix. Hierdurch werden Brüche bei Arylglycerol-β-O-4-Arylether-Gruppen unter Bildung von Phenoxyradikalen vermieden. Es tritt eine Modifizierung der reaktiven funktionellen Gruppen des Lignins durch Deaktivierung und Eliminierung chromophorer, das heißt vergilbender, Komponenten, insbesondere bei Zusammensetzungen gemäß den Ansprüchen 7 bis 10, auf.

Darüber hinaus trat unerwarteter Weise bei Anwendung von Zusammensetzungen mit einer Kombination gemäß den Ansprüchen 7 bis 10 eine synergistische Wirkung auf, die sich durch eine Potenzierung der stabilisierenden Wirkungsweise bei den Polymeren und dem Lignin manifestieren.

Diese Ergebnisse wurden bei Bewitterungsversuchen erhalten. Dabei wird eine sogenannte Kurzbewitterung mit Wasserbelastung, Wärme und Lichteinwirkung auf die Holzsubstrate mit farblosen Beschichtungen durchgeführt. Die eingestrahlte Lichtwellenlänge betrug 250 bis 800 nm, das entspricht dem Bereich der destabilisierenden Lichtwelleniänge bei organischen Polymeren. Es ergaben sich hinsichtlich der relativen Elastizität/Haftung der Beschichtungen Dauerhaftigkeiten von mehr als 4000 Stunden, entsprechend etwa 8 bis 10 Jahren der natürlichen Sonnenlichteinwirkung in einer mitteleuropäischen Klimazone. Wie sich aus dem nachfolgenden Diagramm ergibt, liegen diese Dauerhaftigkeiten normalerweise bei nur etwa 3 bis 400 Stunden.

### Durchführung bzw. Herstellung erfindungsgemäßer Zusammensetzungen

Die chemischen Verbindungen gemäß den Formeln (1) bis (4) und/oder der Formeln (1)+(A3) und/oder der Formeln (2)+(3) und (1)+(3) werden entweder in Wasser oder einem Lösungsmittelgemisch, bestehend aus einem Glykol und Methyl- oder Ethylalkohol oder einem Alkohol und Keton bzw. NMP im Verhältinis 1:1 bis 1:8, vorzugsweise 1:3 bis 1:4, gelöst.

In dieser vorgelösten Form werden die Gemische der vorgenannten Art der Bindemittelsuspension (Polymergemisch mit üblichen Hilfs- und Trägerstoffen) unter Mischen bei +10°C bis +25°C zugefügt.

Wie erwähnt liegen die Anwendungskonzentrationen der vorgenannten Einzelverbindungen bzw. Gemische, berechnet auf Polymer (Feststoff) und Verbindung (Feststoff) zwischen 1 bis 10% und das Lösungsverhältinis der Verbindung bzw. Verbindungen beträgt 1:10 bzw. 10:1, vorzugsweise 1:10 bis 1,4.

Die Zusammensetzungen der vorliegenden Erfindung sind für Beschichtungen auf Polymerbasis für alle denkbaren Anwendungsbereiche, in denen ein lichtinduzierter Abbau der Polymermatrix und/oder von Bestandteilen des Substrates möglich ist, anwendbar.

## Patentansprüche

1. Zusammensetzung zur Stabilisierung von Lignin und Beschichtungen auf Polymerbasis gegenüber lichtinduziertem Abbau, **gekennzeichnet durch** einen Gehalt an wenigstens einer Verbindung aus der Gruppe von N-Hydroxy-2,2,6,6-tetra-methyl-piperidin-Verbindungen und/oder deren Derivaten.

2. Zusammensetzung nach Anspruch 1, **dadurch gekennzeichnet, dass** die wenigstens eine Verbindung 4-Hydroxy-2,2,6,6,tetramethylpiperidinoxid gemäß der folgenden Formel (1) ist:

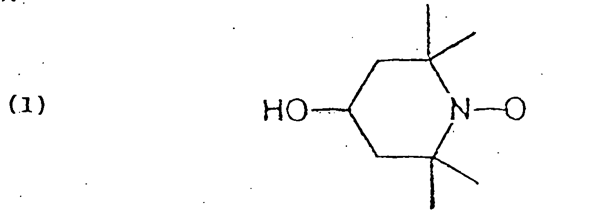

3. Zusammensetzung und Anspruch 1, **dadurch gekennzeichnet, dass** die wenigstens eine Verbindung Bis-(1,2,2,6,6-pentamethyl-4-piperidyl)-sebacat der folgenden Formel (2) ist:

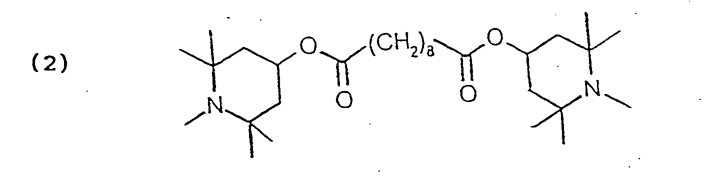

4. Zusammensetzung nach Anspruch 1, **dadurch gekennzeichnet, dass** die wenigstens eine Verbindung Methyl-(1,2,2,6,6,pentamethyl-4-piperidyl-(sebacat) der folgenden Formel (3) ist:

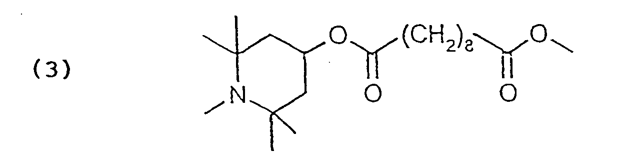

5. Zusammensetzung nach Anspruch 1, **dadurch gekennzeichnet, dass** die wenigstens eine Verbindung 3-(3'-Benzotriazol-2-yl-5-tert-butyl-4-hydroxy-phenyl)-propionsäure in Form der hydrolysierten Base, gemäß der folgenden Formel (4) ist:

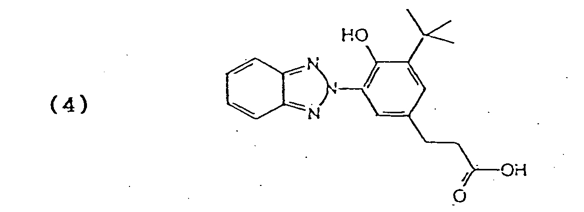

6. Zusammensetzung nach Anspruch 1, **dadurch gekennzeichnet, dass** die wenigstens eine Verbindung der allgemeinen Formel (A3)
R(OCH₂CH₂)₆₋₇OR
entspricht, worin R einen Wasserstoffrest oder den Rest 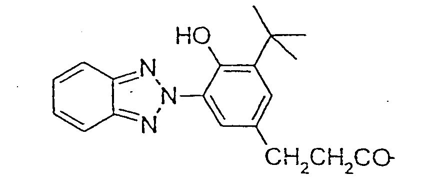 bedeutet.

7. Zusammensetzung nach Anspruch 1, **dadurch gekennzeichnet, dass** sie einen Gehalt einer Kombination der Verbindungen gemäß Formel (1)+(2) enthält.

8. Zusammensetzung nach Anspruch 1, **dadurch gekennzeichnet, dass** sie einen Gehalt einer Kombination der Verbindungen gemäß Formel (1)+(3) enthält.

9. Zusammensetzung nach Anspruch 1, **dadurch gekennzeichnet, dass** sie einen Gehalt einer Kombination der Verbindungen gemäß Formel (1)+(4) enthält.

10. Zusammensetzung nach Anspruch 1, **dadurch gekennzeichnet, dass** sie einen Gehalt einer Kombination der Verbindungen gemäß Formel (1)+(A3) enthält.

11. Zusammensetzung nach einem der Ansprüche 1 bis 10, **dadurch gekennzeichnet, dass** diese Verbindung(en) und/oder Gemische in Anwendungskonzentrationen der Verbindung(en) oder Gemische/Kombinationen, bezogen auf das Polymer, 1 bis 10% bei einem Lösungsmittelverhältnis von 1:10 bis 10:1, vorzugsweise 1:2 bis 1:4, vorliegen.

12. Verwendung einer Zusammensetzung nach einem der Ansprüche 1 bis 11 zur Stabilisierung von Lignin und/oder auf Polymeren basierenden Beschichtungen.
